# EUROPÄISCHE PATENTSCHRIFT

(11) **EP 3 273 280 B1**
(45) Veröffentlichungstag und Bekanntmachung des Hinweises auf die Patenterteilung: **04.10.2023**
(21) Anmeldenummer: 17000972.4
(22) Anmeldetag: 09.06.2017
(51) Int. Cl.: G02B 6/44

(54) **GLASFASER-ABSCHLUSSPUNKT**
OPTICAL FIBRE TERMINATION POINT
POINT DE FERMETURE EN FIBRE DE VERRE

(30) Priorität: 21.07.2016 DE 102016008729
(43) Veröffentlichungstag der Anmeldung: 24.01.2018
(73) Patentinhaber: Langmatz GmbH, 82467 Garmisch-Partenkirchen (DE)
(72) Erfinder: Wankmüller, Andreas, 82481 Mittenwald (DE)
(74) Vertreter: Flosdorff, Jürgen

(56) Entgegenhaltungen:
- AU-A1- 2015 234 333
- DE-A1- 10 314 262
- DE-A1-102010 006 611
- US-A1- 2012 269 487
- US-A1- 2013 243 386
- US-A1- 2016 161 694

## Beschreibung

Die Erfindung betrifft einen Glasfaser-Abschlusspunkt gemäß dem Oberbegriff des Patentanspruchs 1. Der Glasfaser-Abschlusspunkt der betrachteten Art enthält eine Kassette mit einem Eingang für eine ankommende Glasfaser und einem Ausgang für mehrere Pigtails, wobei die Kassette Führungselemente zum Führen und Ablegen von Glasfasern und Pigtails entlang Führungsbahnen aufweist, deren Radius den zulässigen Mindestradius der Glasfasern und Pigtails nicht unterschreitet. Die Führungselemente enthalten bevorzugt kreisabschnittsförmig verlaufende Stege nahe den gegenüberliegenden seitlichen Rändern der Kassette und dazwischen zwei Führungskörper, die mit einem Zwischenraum zueinander seitlich gegenüberliegend angeordnet sind. Die Kassette enthält ferner eine Spleißablage und einen Splitter, der eine eingehende Glasfaser in mehrere, üblicherweise vier bis acht abgehende Glasfasern splittet.

Auf der Kassette oder Spleiß-Kassette wird die von außen zugeführte Glasfaser auf eine Eingangs-Glasfaser des Splitters aufgespleißt, woraufhin die Spleißstelle in der Spleißablage abgelegt wird. Von dem Splitter gehen mehrere, vorzugsweise vier bis acht Glasfasern ab, die mit einer gleichen Anzahl von Pigtails verspleißt werden, wobei auch diese Spleißstellen in der Spleißablage abgelegt und fixiert werden. Die Pigtails führen zu Kupplungen am Ausgang der Kassette, in die ihre Stecker eingesteckt werden, wobei dann Glasfasern von den Kupplungen zu den einzelnen Verbrauchern weitergeführt werden.

Die Glasfasern und Pigtails werden dabei mehrmals entlang den Führungselementen geführt und in Wickel abgelegt, da beträchtliche Überlängen der Glasfasern entlang der Führungsbahnen abgelegt werden müssen. Dabei darf deren zulässiger Mindestradius nicht unterschritten wird, was anderenfalls zu einer unzulässigen Dämpfung von Glasfasern führen könnte.

Bei den bisher bekannten Kassetten der betrachteten Art ist für die Befestigung des Splitters ein gesonderter, zusätzlicher Kassetten-Abschnitt vorgesehen, der außerhalb der äußeren Führungselemente liegt, an denen die Glasfaser-Wickel abgelegt werden. Dieser nur zur Aufnahme des Splitters vorgesehene Aufnahmeraum befindet sich bisher am oberen Randbereich der Kassette und vergrößert deren Länge.

Die DE 10 2010 006611 A1 offenbart eine Kassette, bei der zwar der Eintritt der Faser durch einen unteren Teil eines umlaufenden Steges erfolgt, jedoch ist eine Spleißablage zwischen dem unteren Teil des Steges und der Ablagebahn angeordnet.

Die US 2013/0230291 A1 offenbart eine Vorrichtung mit einem Gehäuse mit einem Splitterfach und einem auf einer anderen Ebene liegenden getrennten Spleißfach, wobei die Glasfasern von dem Spleißfach durch einen Faserdurchlass in das Splitterfach verlaufen. Splitter verlaufen in diesem Splitterfach schräg in einem Zwischenraum zwischen zwei Führungskörpern. Die Druckschrift offenbart keinen umlaufenden Steg, innerhalb dessen die Ablagebahn und der Splitter angeordnet sind.

Bei der Kassette der DE 103 14 262 A1 erfolgt zwar der Eintritt der Faser durch einen unteren Teil eines umlaufenden Stegs, wobei eine Spleißablage zwischen der Ablagebahn und einem oberen Teil des umlaufenden Stegs angeordnet ist, jedoch ist kein Splitter innerhalb des umlaufenden Begrenzungsstegs vorgesehen.

Die US 2012/269487 A1 und die AU 2015 234 333 A1 offenbaren Kassetten, bei denen eine Spleißablage innerhalb einer ovalen Ablagebahn für ein Faserwickel angeordnet sind.

Der vorliegenden Erfindung liegt die Aufgabe zugrunde, die Kassette eines Glasfaser-Abschlusspunkts so zu gestalten, dass sie kleiner ausgebildet sein kann.

Diese Aufgabe wird durch die Merkmale des Patentanspruchs 1 gelöst.

Vorteilhafte Ausgestaltungen der Erfindung sind in den Unteransprüchen gekennzeichnet.

Die Erfindung sieht vor, dass der Splitter in dem Zwischenraum zwischen den beiden inneren Führungskörpern befestigbar ist. Damit befindet sich der Splitter innerhalb der Ablage der Glasfaser und Pigtails entlang ihrer ovalen Ablagebahn, die die gesamte Breite der Kassette in Anspruch nimmt, so dass kein zusätzlicher Platz am oberen Rand der Kassette hierfür erforderlich ist und die Kassette kleinere Abmessungen hat.

Die Führungsbahn zur Ablage der Glasfasern ist durch äußere Stege derart begrenzt, dass die Glasfasern in einem lang gestreckten, in Querrichtung verlaufenden Oval abgelegt werden, wobei die Führungs- und Ablagebahn innen durch die beiden im wesentlichen ovalen Führungskörper begrenzt wird, an deren Außenseiten sich die Glasfasern bei der Montage anlegen können. Die äußeren Stege und die beiden inneren Führungskörper sind bevorzugt spiegelsymmetrisch zu der Längsmittelachse der Kassette angeordnet.

Der Splitter wird schräg in dem Zwischenraum zwischen den beiden Führungskörpern angeordnet, und zwar bevorzugt so, dass die Längsmittelachse den Splitter halbiert. Dabei sollte der Splitter im größtmöglichen Winkel zur Längsmittelachse der Kassette angeordnet sein, derart, dass er mit jeweils einem Ende die Innenwand des zugehörigen Führungskörpers berührt. Dabei ist wesentlich, dass der Splitter in einer solchen Winkellage befestigt ist, dass die eintretende Glasfaser und die abgehenden Glasfasern derart verlaufen, dass der zulässige Biegeradius nicht unterschritten wird. Dies ist durch geeignete Wahl des Abstandes zwischen den beiden inneren Führungskörpern und deren Abmessungen sicherzustellen.

Zur Befestigung des Splitters enthält die Kassette Klemmelemente oder Rastelemente, die bevorzugt an der Kassette angeformt sind, ebenso wie dies auch bei den Führungselementen der Fall ist.

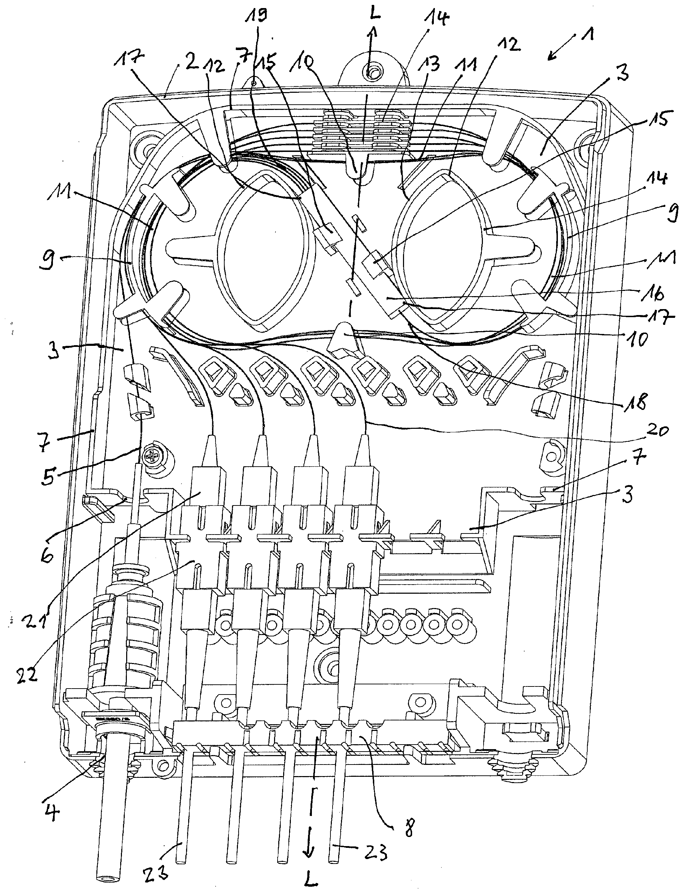

Weitere Einzelheiten der Erfindung ergeben sich aus der nachfolgenden Beschreibung einer bevorzugten Ausführungsform eines Glasfaser-Abschlusspunktes sowie anhand der Zeichnung. Diese zeigt eine Aufsicht auf dessen Kassette in dem zugehörigen Gehäuse.

Der Glasfaser-Abschlusspunkt 1 enthält ein Gehäuse 2, auf dessen Boden eine Kassette 3 befestigt ist. Das Gehäuse 1 hat einen Eingang 4, durch den eine Glasfaser 5 in die Kassette 3 eingeführt wird, die dabei durch einen Ausschnitt 6 in einem im wesentlichen um die gesamte Kassette 3 umlaufenden Begrenzungssteg 7 verläuft. Das Gehäuse 2 enthält zudem einen Ausgang 8 für mehrere Glasfasern, die den Verbrauchern zugeführt werden.

Die Kassette 3 enthält nahe den beiden seitlichen Rändern kreisbogenförmige Führungsstege 9, die zusammen mit einzelnen kurzen Führungsstegen 10 eine in Querrichtung der Kassette liegende, im wesentlichen ovale Ablagebahn 11 für FaserWickel außen begrenzen, sowie zwei voneinander seitlich beabstandete Führungskörper 12, deren Innenwände 13 und Außenwände 14 die Form von identischen Kreisabschnitten haben.

Oberhalb der ovalen Ablagebahn 11 der Fasern ist eine Spleißablage 14 befestigt, in die die Spleißabschnitte der Fasern eingeklemmt werden.

Zwischen den im wesentlichen ovalen Führungskörpern 12 enthält die Kassette 3 Klemmelemente 15, die elastische Nasen haben, mit denen ein Splitter 16 auf der Kassette 3 fixiert wird. Der Splitter 16 verläuft schräg zwischen den beiden Führungskörpern 12, und zwar derart, dass seine beiden Enden 17 an den Innenwänden 13 der Führungskörper 12 anliegen. Damit ist der Splitter 16 im größtmöglichen Winkel zur Längsmittelachse L der Kassette angeordnet, wobei die Längsmittelachse L den Splitter 16 halbiert.

Die eine in die Kassette 3 eingeführte Glasfaser 5 wird auf eine Eingangs-Glasfaser 18 des Splitters 16 aufgespleißt, wobei die zugehörige Spleißstelle in der Spleißablage 14 fest geklemmt wird. Aus dem Splitter 16 führen vier Glasfasern 19 heraus, die mit Pigtails 20 verspleißt werden, deren Stecker 21 in Kupplungen 22 eingesteckt werden, die am unteren Rand der Kassette 3 befestigt sind. Von den Kupplungen 22 verlaufen Glasfasern 23 zu den Verbrauchern. Die Spleißstellen zwischen den Glasfasern 19 und den Pigtails 20 werden ebenfalls in der Spleißablage 14 fixiert.

Es wird betont, dass die Erfindung nicht auf die beschriebenen und dargestellten Ausführungsformen beschränkt ist, Vielmehr sind alle offenbarten Merkmale auf jede sinnvolle Weise einzeln miteinander kombinierbar.

## Patentansprüche

1. Glasfaser-Abschlusspunkt mit einer Kassette (3) mit einem Eingang (4) für eine ankommende Glasfaser (5) und einem Ausgang (8) für mehrere Pigtails, wobei die Kassette (3) Führungselemente zum Führen von Glasfasern (5) und Pigtails entlang Bahnen, deren Radius den zulässigen Mindestradius nicht unterschreitet, und eine Spleißablage (14) sowie einen Splitter (16) aufweist, und wobei die Führungselemente zwei innere Führungskörper (12) aufweisen, die mit einem Zwischenraum einander gegenüberliegend angeordnet sind, wobei der Splitter (16) schräg in dem Zwischenraum zwischen den beiden Führungskörpern (12) befestigt ist, wobei die Führungselemente ferner nahe ihren beiden seitlichen Rändern kreisbogenförmige Führungsstege (9) aufweisen, wobei die kreisbogenförmigen Führungsstege (9) mit einzelnen kurzen Führungsstegen (10) eine in Querrichtung der Kassette (3) liegende ovale Ablagebahn (11) für ein Faserwickel außen begrenzen und wobei die ankommende Glasfaser durch einen Ausschnitt (6) in einem im wesentlichen um die gesamte Kassette (3) umlaufenden Begrenzungssteg (7) verläuft, wobei die Führungselemente, die Spleißablage (14), der Splitter (16), die inneren Führungskörper (12) und die ovale Ablagebahn (11) für das Faserwickel innerhalb des umlaufenden Begrenzungsstegs (7) angebracht sind und wobei sich der Ausschnitt (6) in einem unteren Teil des umlaufenden Begrenzungsstegs (7) befindet und sich die Spleißablage (14) oberhalb der ovalen Ablagebahn (11), zwischen der ovalen Ablagebahn (11) und einem oberen Teil des Begrenzungsstegs (7) befindet.

2. Glasfaser-Abschlusspunkt-Kassette nach Anspruch 1,
**dadurch gekennzeichnet,**
**dass** die kreisförmigen Führungsstege (9) und die beiden Führungskörper (12) spiegelsymmetrisch zu der Längsmittelachse (L) der Kassette (3) angeordnet sind.

3. Glasfaser-Abschlusspunkt-Kassette nach Anspruch 1 oder 2,
**dadurch gekennzeichnet,**
**dass** die Längsmittelachse (L) den Splitter (16) halbiert.

4. Glasfaser-Abschlusspunkt-Kassette nach einem der Ansprüche 1 bis 3,
**dadurch gekennzeichnet,**
**dass** der Splitter (16) mit seinen beiden Enden an den Innenwänden (13) der Führungskörper (12) anliegt.

5. Glasfaser-Abschlusspunkt-Kassette nach einem der Ansprüche 1 bis 4,
**dadurch gekennzeichnet,**
**dass** die Kassette Klemmelemente (15) oder Rastelemente zum lösbaren Befestigen des Splitters (16) aufweist.

6. Glasfaser-Abschlusspunkt-Kassette nach einem der Ansprüche 1 bis 5,
**dadurch gekennzeichnet,**
**dass** die den Splitter (16) einschließende Führungsbahn der Glasfasern (18, 19) den zulässigen Mindestradius nicht unterschreitet.

## Claims

1. An optical fibre termination point including a cassette (3) with an inlet (4) for an incoming glass fibre (5) and an outlet (8) for a plurality of pigtails, wherein the cassette has guide elements for guiding glass fibres (5) and pigtails along pathways, the radius of which is not less than the permissible minimum radius, and a splice tray (14) and a splitter (16), and wherein the guide elements have two inner guide bodies (12), which are arranged opposite to one another with a gap between them, wherein the splitter (16) is fastened obliquely in the gap between the two guide bodies (12), wherein the guide elements further include circular arcuate guide webs (9) close to their two lateral edges, wherein the circular arcuate guide webs (9) externally border an oval storage track (11), lying in the transverse direction of the cassette (3), for a fibre coil with individual short guide webs (10) and wherein the incoming glass fibre extends through an opening (6) in a boundary wall (7) extending substantially around the entire cassette (3), wherein the guide elements, the splice tray (14), the splitter (16), the inner guide bodies (12) and the oval storage track (11) for the fibre coil are fixed within the peripheral boundary web (7) and wherein the opening (6) is situated in a lower portion of the peripheral boundary web (7) and the splice tray (14) is situated above the oval storage track (11) between the oval storage track (11) and an upper portion of the boundary web (7).

2. An optical fibre termination point cassette as claimed in Claim 1, **characterised in that** the circular guide webs (9) and the two guide bodies (12) are arranged mirror symmetrically with respect to the longitudinal central axis (L) of the cassette (3).

3. An optical fibre termination point cassette as claimed in Claim 1 or 2, **characterised in that** the longitudinal central axis (L) bisects the splitter (16).

4. An optical fibre termination point cassette as claimed in one of Claims 1 to 3, **characterised in that** the two ends of the splitter (16) engage the inner walls (13) of the guide bodies (12).

5. An optical fibre termination point cassette as claimed in one of Claims 1 to 4, **characterised in that** the cassette includes clamping elements (15) or locking elements for releasably securing the splitter (16).

6. An optical fibre termination point cassette as claimed in one of Claims 1 to 5, **characterised in that** the guide pathway, which encloses the splitter (16), for the glass fibres (18, 19) is not less than the permissible minimum radius.

## Revendications

1. Point de fermeture en fibre de verre avec une cassette (3) avec une entrée (4) pour une fibre de verre (5) arrivant et avec une sortie (8) pour plusieurs fibres amorces, dans lequel la cassette (3) présente des éléments de guidage destinés à guider des fibres de verre (5) et des fibres amorces le long de voies, dont le rayon ne dépasse pas le rayon minimal autorisé, et un support d'épissures (14) ainsi qu'un diviseur (16), et dans lequel les éléments de guidage présentent deux corps de guidage intérieurs (12), qui sont disposés de manière à se faire face les uns les autres avec un espace intermédiaire, dans lequel le diviseur (16) est fixé de manière oblique dans l'espace intermédiaire entre les deux corps de guidage (12),
dans lequel les éléments de guidage présentent, en outre à proximité de leurs deux bords latéraux, des entretoises de guidage (9) en forme d'arc de cercle,
dans lequel
les entretoises de guidage (9) en forme d'arc de cercle délimitent à l'extérieur, avec diverses entretoises de guidage (10) courtes, une voie de support (11) ovale située dans la direction transversale de la cassette (3) pour un enroulement de fibres, et
dans lequel
la fibre de verre arrivant s'étend à travers une découpe (6) dans une entretoise de limitation (7) s'étendant en périphérie sensiblement tout autour de la totalité de la cassette (3),
dans lequel les éléments de guidages, le support d'épissures (14), le diviseur (16), les corps de guidage intérieurs (12) et la voie de support ovale (11) pour l'enroulement de fibres sont installés à l'intérieur de l'entretoise de délimitation (7) s'étendant en périphérie, et
dans lequel la découpe (6) se situe dans une partie inférieure de l'entretoise de délimitation (7) s'étendant en périphérie et le support d'épissures (14) se trouve au-dessus de la voie de support ovale (11) entre la voie de support ovale (11) et une partie supérieure de l'entretoise de délimitation (7).

2. Cassette de point de fermeture en fibre de verre selon la revendication 1,
**caractérisée en ce que** les entretoises de guidage (9) en forme d'arc de cercle et les deux corps de guidage (12) sont disposés de manière symétrique en miroir par rapport à l'axe central longitudinal (L) de la cassette (3) .

3. Cassette de point de fermeture en fibre en verre selon la revendication 1 ou 2,
**caractérisée en ce**
**que** l'axe central longitudinal (L) divise en deux le diviseur (16).

4. Cassette de point de fermeture en fibre de verre selon l'une quelconque des revendications 1 à 3,
**caractérisée en ce**
**que** le diviseur (16) repose par ses deux extrémités sur les parois intérieures (13) des corps de guidage (12) .

5. Cassette de point de fermeture en fibre de verre selon l'une quelconque des revendications 1 à 4,
**caractérisée en ce**
**que** la cassette présente des éléments de serrage (15) ou des éléments d'enclenchement pour fixer de manière amovible le diviseur (16).

6. Cassette de point de fermeture en fibre de verre selon l'une quelconque des revendications 1 à 5,
**caractérisée en ce**
**que** la voie de guidage, renfermant le diviseur (16), des fibres de verre (18, 19) ne dépasse pas le rayon minimal autorisé.
